(19) Europäisches Patentamt
European Patent Office
Office européen des brevets

(11) EP 1 967 249 A1

(12) **EUROPÄISCHE PATENTANMELDUNG**

(43) Veröffentlichungstag:
**10.09.2008 Patentblatt 2008/37**

(51) Int Cl.:
*B01D 53/14* *(2006.01)* *B01D 3/00* *(2006.01)*

(21) Anmeldenummer: 07004437.5

(22) Anmeldetag: **05.03.2007**

(84) Benannte Vertragsstaaten:
**AT BE BG CH CY CZ DE DK EE ES FI FR GB GR
HU IE IS IT LI LT LU LV MC MT NL PL PT RO SE
SI SK TR**
Benannte Erstreckungsstaaten:
**AL BA HR MK RS**

(71) Anmelder: **RWE Power Aktiengesellschaft
45128 Essen (DE)**

(72) Erfinder:
• **Krumeck, Matthias
42579 Heiligenhaus (DE)**
• **Moser, Peter
50859 Köln (DE)**
• **Mertikat, Horst
51465 Bergisch-Gladbach (DE)**

(74) Vertreter: **Polypatent
Braunsberger Feld 29
51429 Bergisch Gladbach (DE)**

(54) **Verfahren auf Basis der Zweiphasendestillation zur Nutzung von Niedertemperaturwärme für die Regeneration von CO2-Lösungsmitteln bei der CO2-Abtrennung aus Abgasen mittels CO2-Wäsche**

(57) Die vorliegende Erfindung betrifft ein Verfahren zur Abtrennung von $CO_2$ aus Abgasen, bei dem in einer Abgaswaschanlage das $CO_2$ durch ein oder mehrere $CO_2$-bindende Lösungsmittel aus den Abgasen ausgewaschen wird und bei dem bei der Regeneration des $CO_2$-beladenen Lösungsmittels eine Strippkomponente verwendet wird. Die Erfindung betrifft des weiteren eine entsprechend ausgerüstete Abgaswaschanlage zur Abtrennung von $CO_2$ aus Abgasen. Ein weiterer Gegenstand der Erfindung ist ein Verfahren und eine entsprechende Abgaswaschanlage, bei der eine Strippkomponente bei der Regeneration eines $CO_2$-beladenen Lösungsmittels verwendet wird, wobei diese Strippkomponente über einen zweiten Reboiler, der mit Niedertemperaturwärme betrieben werden kann, erwärmt und anschließend dem Regenerationsprozess wieder zur Verfügung gestellt wird.

Fig.4

**Beschreibung**

Technisches Gebiet

Die vorliegende Erfindung betrifft ein Verfahren zur Abtrennung von $CO_2$ aus Abgasen, bei dem in einer Abgaswaschanlage das $CO_2$ durch ein oder mehrere $CO_2$-bindende Lösungsmittel aus den Abgasen ausgewaschen wird und bei dem bei der Regeneration des $CO_2$-beladenen Lösungsmittels eine Strippkomponente verwendet wird. Die Erfindung betrifft des weiteren eine entsprechend ausgerüstete Abgaswaschanlage zur Abtrennung von $CO_2$ aus Abgasen. Ein weiterer Gegenstand der Erfindung ist ein Verfahren und eine entsprechende Abgaswaschanlage, bei der eine Strippkomponente bei der Regeneration eines $CO_2$-beladenen Lösungsmittels verwendet wird, wobei diese Strippkomponente über einen zweiten Reboiler, der mit Niedertemperaturwärme betrieben werden kann, erwärmt und anschließend dem Regenerationsprozess wieder zur Verfügung gestellt wird.

Hintergrund der Erfindung

Mit dem Ziel der Klimavorsorge wird seit einiger Zeit die Reduzierung der Emission von Treibhausgasen, d. h. insbesondere von $CO_2$ aus Industrieprozessen, angestrebt. Vor dem Hintergrund des bestehenden $CO_2$-Zertifikatehandels kann eine verminderte $CO_2$-Freisetzung zudem heute die Wirtschaftlichkeit von Produktionsanlagen steigern, speziell von fossile Brennstoffe nutzenden Kraftwerken zur Stromerzeugung. Deshalb werden derzeit intensiv Möglichkeiten zur $CO_2$-Abtrennung aus Kraftwerks- bzw. aus sonstigen Industrieabgasen und zur späteren unterirdischen Speicherung des $CO_2$ untersucht. Innerhalb der nächsten Dekaden wird die $CO_2$-Wäsche (englisch: post combustion capture) unter den $CO_2$-Abtrennungstechniken eine herausragende Stellung einnehmen, wenn der $CO_2$-Ausstoß in diesem Zeitraum signifikant gemindert werden soll.

Die chemische $CO_2$-Absorption ist derzeit als einzige Technik vergleichsweise einfach großtechnisch nachrüstbar und damit schnell umsetzbar, da im Gegensatz zur IGCC-Technik (Integrated Gasification Combined Cycle) mit Abtrennung oder der Oxyfuel-Technik nicht auf den Neubau bzw. Ersatz der bestehenden $CO_2$-emittierenden Anlage - nach Ablauf ihrer ökonomisch bedingten Lebensdauer - gewartet werden muss. Zudem ist die Anwendung der $CO_2$-Wäsche nicht nur auf Rauchgase aus Kraftwerksprozessen beschränkt, sondern allgemein für die $CO_2$-Abtrennung aus Industrieabgasen, insbesondere aus drucklosen Industrieabgasen, einsetzbar.

Wie bei allen $CO_2$-Abtrennungstechniken ist jedoch auch die Realisierung der chemischen Absorption mit einem deutlichen Wirkungsgradsverlust verbunden. Die Optimierungsansätze von Chemieanlagenbauern und chemischer Industrie zur Effizienzsteigerung sind bisher im Wesentlichen auf die Verbesserung der Lösungsmittel und einzelner Anlagenkomponenten fokussiert. Zur Wirkungsgradoptimierung des Wäscheprozesses selbst ist derzeit nur wenig bekannt.

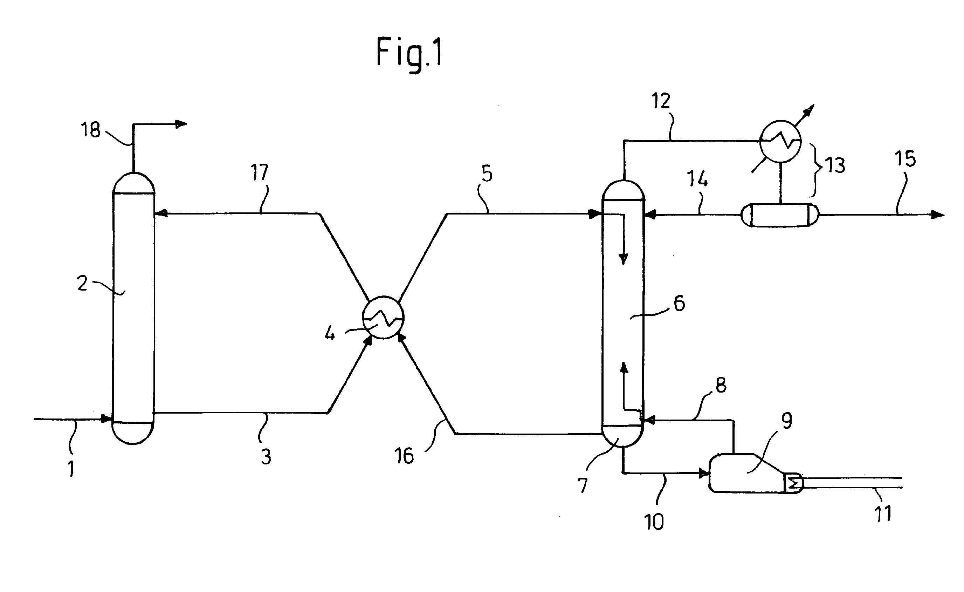

Ein typischer $CO_2$-Waschprozess des Standes der Technik wird in dem Verfahrensschema in Abbildung 1 gezeigt. Das in einem Abgas (1) enthaltene $CO_2$ wird in einer Waschkolonne bzw. einem Absorber (2) bei niedriger Temperatur (z. B. 40°C bis 60°C) mit einer wässrigen Lösung der $CO_2$-bindenden Komponente, im Folgenden beides zusammen kurz "Lösungsmittel" bezeichnet, (z. B. einer Mischung aus Wasser mit Monoethanolamin, MEA) ausgewaschen. Nachdem das $CO_2$-beladene Lösungsmittel (3) über einen Kreuzstrom-Wärmetauscher (4) vorgewärmt wurde, wird das so vorgewärmte $CO_2$-beladene Lösungsmittel (5) in den Desorber (6), der auch Stripper genannt wird, eingeleitet. Hier strömt dem flüssigen Lösungsmittel von unten nahe dem Desorber-Sumpf (7) etwa 110°C bis 130°C heißer Dampf (8) entgegen, der im sogenannten Reboiler (9) durch Erhitzen eines Teilstroms (10) des Lösungsmittels mit Hilfe von Niederdruckdampf (11) erzeugt wird. Hier wird typischerweise 4-bar-Dampf verwendet, was dem Druckniveau in der Überströmleitung zwischen dem Mitteldruck- und Niederdruckteil der Dampfturbine in Kraftwerken entspricht. Bei diesen erhöhten Temperaturen gibt das Lösungsmittel das $CO_2$ wieder ab. Hinter dem Desorber-Kopf wird das heiße $CO_2$/Wasserdampfgemisch (12) durch Kondensation des Wassers (13) getrennt, wobei das Wasser anschließend dem Prozess zurückgeführt wird (14) und das $CO_2$ (15) für z.B. die Speicherung zur Verfügung steht. Das heiße $CO_2$-arme Lösungsmittel (16) wird zur Abkühlung über den Kreuzstrom-Wärmetauscher (4) geführt, um anschließend als abgekühltes $CO_2$-armes Lösungsmittel (17) dem Wäschekreislauf wieder zur Verfügung zu stehen. Während des Prozesses wird über den Kopf des Absorbers (2) das vom $CO_2$ befreite Abgas (18) abgeführt.

Der Energiebedarf für die Regeneration des Lösungsmittels, der über den Reboiler eingebracht werden muss, lässt sich in drei Funktionsbereiche aufteilen. Ca. 40 % des Energiebedarfs sind zur Erzeugung von Dampf im Desorber, dem sogenannten Strippdampf, aufzubringen, der den $CO_2$-Partialdruck über der beladenen Waschlauge im Desorber vermindert, indem das $CO_2$ dort verdünnt wird. Das Gleichgewicht der $CO_2$-Freisetzungsreaktion wird so in die gewünschte Richtung getrieben. Weitere ca. 10 % des Energiebedarfs werden für die Erwärmung des vorgewärmten beladenen Lösungsmittels (5) von der Eintrittstemperatur, die ca. 80°C bis 100°C beträgt, auf ca. 110°C bis 130°C benötigt. Ca. 50 % der eingesetzten Energie werden schließlich für das Aufbrechen der chemischen Bindung zwischen $CO_2$ und dem Lösungsmittel benötigt.

Als Wärmequelle für die Regeneration dient bei den derzeitig am Markt verfügbaren Verfahren in der Regel 4-bar-Dampf (Niederdruckdampf, ND-Dampf). Da erhebliche Niederdruckdampfmengen benötigt werden, steht in Kraftwerken entsprechend weniger Dampf in dem Niederdruckteil der Dampfturbine zur Stromerzeugung zur Verfügung. Bei einem nicht optimierten Waschprozess können bis zu 70 % der Niederdruckdampfmenge eines Kraftwerkblockes nur für die Regeneration des $CO_2$-Lösungsmittels benötigt werden. Dies hat zur Folge, dass sich allein durch die Niederdruckdampfentnahme der elektrische Wirkungsgrad eines Kraftwerkes um bis zu 11 Prozentpunkte verringert, wobei der elektrische Eigenbedarf der Abtrennungsanlage und des $CO_2$-Kompressors hierbei noch nicht berücksichtigt ist.

Der Erfindung liegt somit die Aufgabenstellung zugrunde, den in Abbildung 1 gezeigten Regenerationsprozess einer $CO_2$-Wäsche des Standes der Technik derart zu modifizieren, dass sich die für die Erzeugung des Strippdampfes im Reboiler benötigte Niederdruckdampfmenge verringert, ggf. die Regenerierungstemperatur im Reboiler bzw. Desorber für das $CO_2$-Lösungsmittel abgesenkt wird, was wiederum zu einem weiteren, geringeren Verbrauch an Niederdruckdampf führen würde. Eine weitere Aufgabenstellung der Erfindung besteht darin, bisher im Kraftwerksprozess weitgehend ungenutzte Niedertemperaturwärme, bei der die Temperatur des Heizmediums <100°C bei atmosphärischem Druck beträgt, statt des wertvollen Niederdruckdampfes zur Regeneration des Lösungsmittels nutzen zu können.

Beschreibung der Erfindung

Die gestellte Aufgabe wird dadurch gelöst, dass in einem Verfahren zur Abtrennung von $CO_2$ aus Abgasen, bei dem in einer Abgaswaschanlage das $CO_2$ durch ein oder mehrere $CO_2$-bindende Lösungsmittel aus den Abgasen ausgewaschen wird, bei der Regeneration des $CO_2$-beladenen Lösungsmittels eine Strippkomponente verwendet wird. Als Strippkomponente kann eine am Markt verfügbare Chemikalie verwendet werden, die mit der Waschlauge im wesentlichen nicht mischbar ist, mit dieser praktisch nicht reagiert und die einen höheren Dampfdruck, also eine niedrigere Siedetemperatur, als diese aufweisen sollte. Beispielsweise kommen als Strippkomponenten Alkane, etwa Fluoralkane, in Betracht.

Die Erfindung macht sich den bei der sogenannten Wasserdampf- bzw. Trägerdampfdestillation bekannten Effekt zu Nutzen, dass bei der Destillation zweier nicht mischbarer und nicht miteinander reagierender Flüssigkeiten - hier $CO_2$-Lösungsmittel und Strippkomponente - dieses Gemisch bereits bei einer niedrigeren Temperatur zu sieden beginnt, als die niedrigste Siedetemperatur der beiden reinen Komponenten. Das Vorhandensein der zweiten Komponente, also der Strippkomponente, hat also zur Folge, dass die Mischung bereits siedet, bevor die einzelnen reinen Komponenten ihren Siedepunkt erreicht haben. Die Zusammensetzung der Dampfphase bzw. des kondensierten Destillats ist von der absoluten Menge der beiden Komponenten unabhängig. Die beiden Stoffe finden sich daher darin im Verhältnis ihrer Dampfdrücke bei der Siedetemperatur wieder, also

$$\text{Stoffmenge Lösungsmittel : Stoffmenge Strippkomponente} = p_{Lsgm} : p_{Stripp}.$$

Neben der Nicht-Mischbarkeit mit dem $CO_2$-Lösungsmittel kann durch geeignete Wahl der Strippkomponente im Hinblick auf ihren Dampfdruck, ihren Siedepunkt und ihre Verdampfungsenthalpie und unter Berücksichtigung der Temperaturabhängigkeit der $CO_2$-Freisetzung aus dem beladenen $CO_2$-Lösungsmittel zum einen der Energiebedarf für die Strippdampferzeugung reduziert werden, z. B. in einer der weiter unten beschriebenen Ein-Reboiler-Varianten, und zum anderen kann Niedertemperaturwärme in den $CO_2$-Waschprozess eingekoppelt werden, z. B. in den unten beschriebenen Zwei-Reboiler-Varianten.

In einer ersten Variante (Variante 1) des erfindungsgemäßen Verfahrens umfasst die verwendete Abgaswaschanlage jeweils zumindest eine Absorberkolonne (Waschkolonne), eine Desorberkolonne, einen zwischen Absorber- und Desorberkolonne vorgesehenen Wärmetauscher, vorzugsweise ein Kreuzstrom-Wärmetauscher, einen mit dem Kopf der Desorberkolonne verbundenen Kondensator und einen mit dem Sumpf der Desorberkolonne verbundenen Reboiler.

Das erfindungsgemäße Verfahren gemäß Variante 1 wird analog zu dem oben beschriebenen und in Abbildung 1 gezeigten klassischen $CO_2$-Waschprozess betrieben, wobei jedoch die dem Prozess hinzugefügte Strippkomponente am Kondensator zusammen mit dem Wasser aus dem Lösungsmittel kondensiert und gemeinsam mit diesem in die Desorberkolonne zurückgeführt wird.

In einer zweiten Variante (Variante 2) des erfindungsgemäßen Verfahrens umfasst die Abgaswaschanlage zusätzlich einen dem Kondensator nachgeschalteten Abscheider, der die Strippkomponente von dem $CO_2$-bindenden Lösungsmittel trennt. Anschließend kann dann die Strippkomponente getrennt vom $CO_2$-bindenden Lösungsmittel in den Desorber zurückgeführt werden.

Der Vorteil der beiden oben genannten Varianten des erfindungsgemäßen Verfahrens besteht darin, dass der Energiebedarf für die Strippdampferzeugung reduziert werden kann, da als Strippdampf nicht mehr allein z. B. Wasserdampf verwendet wird, sondern ein die Strippkomponente enthaltendes Dampfgemisch mit höherem Dampfdruck als ohne Strippkomponente.

Bei den oben genannten Varianten 1 und 2 des erfindungsgemäßen Verfahrens können auch Strippkomponenten verwendet werden, die einen relativ hohen Siedepunkt haben, also T >100°C, sofern unter Berücksichtigung des Typs und der eingesetzten Menge der Strippkomponente insgesamt eine Siedepunkterniedrigung der Waschlauge erreicht wird und der Strippeffekt als treibende Kraft die durch die - aufgrund der Siedepunkterniedrigung - gesenkte Temperatur im Desorber geminderte $CO_2$-Freisetzungstendenz übertrifft.

Vorteil der Variante 2 gegenüber Variante 1 des erfindungsgemäßen Verfahren ist, dass durch Abtrennung des Lösungsmittels von der Strippkomponente beide Komponenten in der Waschanlage getrennt voneinander geführt werden können und z. B. an unterschiedlichen Stellen in der Desorberkolonne eingebracht werden oder verschiedenen Prozesszwischenschritten unterworfen werden können.

In einer alternativen und bevorzugten weiteren Variante (Variante 3) des erfindungsgemäßen Verfahrens umfasst die Abgaswaschanlage zusätzlich einen dem Abscheider nachgeschalteten zweiten Reboiler, der die abgetrennte Strippkomponente erwärmt und von dem aus die Strippkomponente direkt in den Desorbersumpf zurückgeführt wird.

In einer anderen Variante (Variante 4) dieser Ausführungsform wird die im zweiten Reboiler erwärmte Strippkomponente nicht direkt in den Desorbersumpf, sondern via den ersten Reboiler in den Desorber zurückgeführt. Bei dieser Variante wird also die Strippkomponente im zweiten Reboiler zunächst vorgewärmt und anschließend im ersten Reboiler gemeinsam mit dem Reboilerumlauf der Desorberkolonne auf die Temperatur von 110°C bis 130°C erwärmt, bevor das Gemisch aus Lösungsmittel und Strippkomponente gemeinsam in den Desorber zurückgeführt wird.

In einer besonders bevorzugten Ausführungsform der beiden zuvor genannten Varianten 3 und 4 wird der zweite Reboiler mit Niedertemperaturwärme betrieben. Niedertemperaturwärme stellt eine im Kraftwerksprozess weitgehend ungenutzte Wärmequelle dar und fällt z. B. im Wasserdampfkreislauf oder bei der Kohletrocknung eines Trockenbraunkohle-Kraftwerks an. Die Temperatur des Heizmediums bei der Niedertemperaturwärme liegt bei unter ca. 105°C. Niedertemperaturwärme wird hier im Sinne des Wärmeinhalts kondensierten Dampfes (Kondensat) bei atmosphärischem Druck oder im Sinne des Wärmeinhalts eines bei dieser Temperatur geflashten Kondensats definiert.

Wenn bei der oben genannten Variante 3 des erfindungsgemäßen Verfahrens - bei der also die im zweiten Reboiler erwärmte Strippkomponente direkt in den Desorber zurückgeführt wird - der zweiten Reboiler mit Niedertemperaturwärme betrieben wird, ist es vorteilhaft, den Siedepunkt der Strippkomponente so zu wählen, dass er unter 100°C liegt bzw. so, dass die Niedertemperaturwärme ausreicht, die Strippkomponente zu verdampfen, so dass direkt ein Strippkomponentendampf in den Desorber eingebracht werden kann.

Bei der zuvor beschriebenen Variante 4 des Verfahrens - also bei der die im zweiten Reboiler erwärmte Strippkomponente in den ersten Reboiler überführt wird - kann der Siedepunkt der Strippkomponente auch über 100°C liegen, da die Dampferzeugung dann im ersten Reboiler erfolgt und der zweite Reboiler nur der Vorerwärmung der Strippkomponente dient.

Vorteil der Varianten 3 und 4 des erfindungsgemäßen Verfahrens ist, dass hier die geringwertige Niedertemperaturwärme in den $CO_2$-Wäscheprozess eingekoppelt werden kann. Auf diese Weise kann der Bedarf an wertvollem Niederdruckdampf zur Regeneration des Lösungsmittels im $CO_2$-Wäscheprozess deutlich verringert werden.

In einer weiteren Variante (Variante 5) des erfindungsgemäßen Verfahrens wird die am Abscheider abgetrennte Strippkomponente direkt in den ersten Reboiler - ohne Umweg über einen zweiten Reboiler - überführt und dort gemeinsam mit dem Sumpfstrom der Desorberkolonne erhitzt und dann in den Desorber zurückgeführt. Bei dieser Variante kann der Siedepunkt der Komponente ohne weiteres oberhalb von 100°C liegen, da der Reboiler vorzugsweise mit 4-bar-Dampf betrieben wird und nicht mit Niedertemperaturwärme.

Ein weiterer bisher nicht genannter Vorteil aller fünf Varianten des erfindungsgemäßen Verfahrens ist, dass aufgrund des niedrigeren Siedepunktes des Lösungsmittel/Strippkomponenten-Gemisches die Reboiler bei niedrigeren Temperaturen betrieben werden können. Dies führt einerseits zur Senkung der Energiekosten und hat andererseits aber auch den Vorteil, dass eine geringere Degradation, also Zersetzung, des Lösungsmittels erfolgt. Das führt zu einer weiteren Senkung der Betriebskosten, da das Lösungsmittel seltener ersetzt werden muss.

Bei den oben beschriebenen erfindungsgemäßen Verfahren zur Abtrennung von $CO_2$ aus Abgasen, wobei als $CO_2$-enthaltende Abgase Verbrennungsabgase aus Kraftwerksprozessen oder sonstige Industrieabgase, insbesondere drucklose Industrieabgase, in Frage kommen, wird als $CO_2$-bindendes Lösungsmittel entweder ein nichtwässriges, z.B. aus der Gruppe der ionischen Flüssigkeiten, oder ein wässriges Lösungsmittel verwendet.

Als wässrige $CO_2$-Lösungsmittel können Amine, Ammoniak, Aminosäuren, Alkali- und Erdalkalicarbonate Verwendung finden. Insbesondere kommen jedoch wässrige Amine zum Einsatz, wobei Monoethanolamin, Methyldiethanolamin und/oder sterisch gehinderte Amine die gebräuchlichsten und bevorzugtesten sind. Die genannten Amine werden dabei in einem 5 bis 50 Gew.-%igen Anteil in wässriger Lösung verwendet.

Bekanntestes Lösungsmittel für die $CO_2$-Abtrennung aus Prozessgasen oder z. B. aus Erdgas ist Monoethanolamin, das je nach Prozessanbieter als 20 oder 30 Gew.-%ige wässrige Lösung eingesetzt wird. Bezüglich der Aufnahmekapazität des Lösungsmittels mit $CO_2$, seiner Oxidationsstabilität, seiner Korrosivität und insbesondere des Wärmebedarfs für die Regeneration, bieten sterisch gehinderte Amine einen deutlichen Vorteil, sind aber spezifisch teurer.

Methyldiethanolamin wird vorteilhaft bei druckaufgeladenen, sauerstofffreien Prozessen angewendet und weist einen vergleichsweise kleinen Energiebedarf für die Regeneration auf. Bei atmosphärischem Druck benötigt Methyldiethanolamin allerdings den Zusatz von Aktivatoren, also insbesondere von Aminen mit schnellerer $CO_2$-Bindungsreaktion, aber niedrigerer Beladbarkeit, als das eigentlich $CO_2$-bindende Amin in dem $CO_2$-Lösungsmittel, z.B. Piperazin.

Ein weiterer Gegenstand der Erfindung ist eine Abgaswaschanlage zur Abtrennung von $CO_2$ aus Abgasen, insbesondere aus Verbrennungsabgasen aus Kraftwerksprozessen oder aus sonstigen Industrieabgasen, wobei diese Abgaswaschanlage zumindest eine Absorberkolonne, eine Desorberkolonne, einen zwischen Absorber- und Desorberkolonne vorgesehenen Wärmetauscher, einen mit dem Kopf der Desorberkolonne verbundenen Kondensator und einen mit dem Sumpf der Desorberkolonne verbundenen Reboiler sowie zusätzlich einen dem Kondensator nachgeschalteten Abscheider, der eine Strippkomponente von einem Kondensat abtrennt, umfasst. Das Kondensat besteht dabei insbesondere aus der Strippkomponente und dem Wasseranteil des $CO_2$-bindenden Lösungsmittels. Diese erfindungsgemäße Abgaswaschanlage eignet sich zum Betreiben aller Varianten 2 bis 5 des erfindungsgemäßen Verfahrens zur Abtrennung von $CO_2$ aus Abgasen.

In einer speziellen Ausführungsform der erfindungsgemäßen Abgaswaschanlage umfasst die Abgaswaschanlage zusätzlich einen dem Abscheider nachgeschalteten zweiten Reboiler, von dem aus die Strippkomponente entweder direkt (Variante 3) oder via den ersten Reboiler (Variante 4) in den Desorber bzw. Desorbersumpf zurückgeführt wird. Diese Ausführungsformen der erfindungsgemäßen Abgaswaschanlage eignen sich zum Betreiben der Varianten 3 bzw. 4 des erfindungsgemäßen Verfahrens zur Abtrennung von $CO_2$ aus Abgasen.

In einer besonders bevorzugten Ausführungsform der zuvor genannten erfindungsgemäßen Abgaswaschanlagen ist der zweite Reboiler ein mit Niedertemperaturwärme betriebener Reboiler.

In einer anderen Ausführungsform der erfindungsgemäßen Abgaswaschanlage wird von dem Abscheider aus die Strippkomponente entweder direkt (Variante 2) oder via den ersten Reboiler (Variante 5) in den Desorber zurückgeführt. Ein zweiter Reboiler ist hier nicht vorgesehen. Gemäß dieser Ausführungsformen der erfindungsgemäßen Abgaswaschanlage lassen sich Variante 2 bzw. Variante 5 des erfindungsgemäßen Verfahrens zur Abtrennung von $CO_2$ aus Abgasen betreiben.

Ganz allgemein ist somit Gegenstand der vorliegenden Erfindung auch die Verwendung einer Strippkomponente bei der Regeneration eines $CO_2$-beladenen Lösungsmittels in einem Verfahren zur Abtrennung von $CO_2$ aus Abgasen in einer Abgaswaschanlage.

Des weiteren ist die Verwendung eines einem Kondensator nachgeschalteten Abscheiders und, optional, eines dem Abscheider nachgeschalteten Reboilers in einem Verfahren zur Abtrennung von $CO_2$ aus Abgasen in einer Abgaswaschanlage, wobei der zweite Reboiler optional ein mit Niedertemperaturwärme betriebener Reboiler sein kann, Gegenstand der vorliegenden Erfindung.

Abbildung 1 zeigt eine klassische $CO_2$-Waschanlage nach dem Stand der Technik, die bereits oben näher erläutert wurde. Mit einer solchen Anlage kann jedoch auch das erfindungsgemäße Verfahren gemäß Variante 1 betrieben werden.

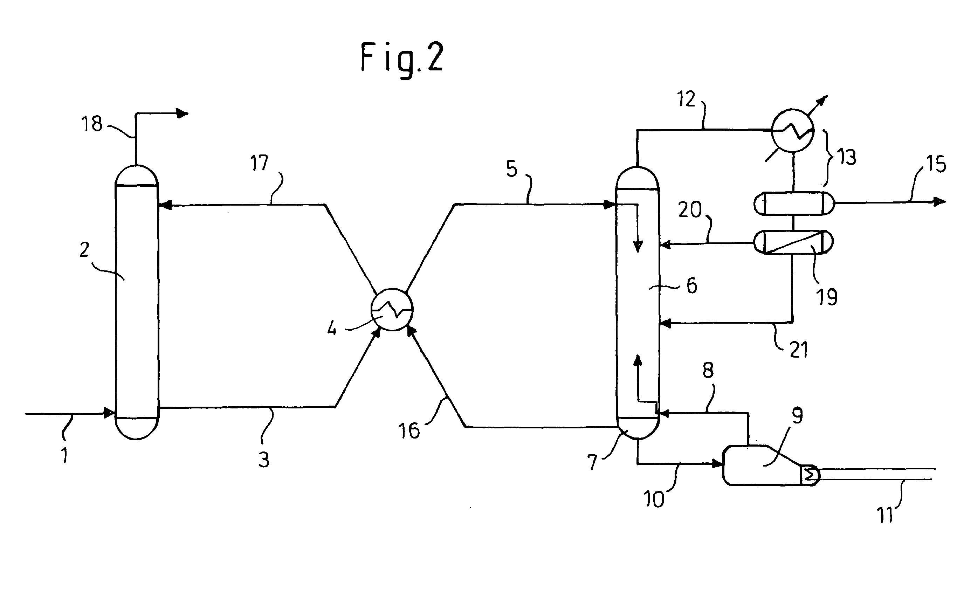

Abbildung 2 zeigt eine erfindungsgemäße Abgaswaschanlage, mit der das Abgaswaschverfahren gemäß Variante 2 betrieben werden kann. Von der in Abbildung 1 gezeigten klassischen Anlage unterscheidet sich diese Anlage dadurch, dass diese einen dem Kondensator (13) nachgeschalteten Abscheider (19) umfasst, mit dessen Hilfe die Strippkomponente getrennt vom Lösungsmittel in den Desorber (6) zurückgeführt wird. Die Rückführung des abgetrennten Lösungsmittels erfolgt über die Leitung (20) und nicht über die in Abbildung 1 gezeigte Leitung (14). Weiterhin umfasst die Anlage eine Leitung (21) mit der die im Abscheider (19) abgetrennte Strippkomponente in den Desorber (6) zurückgeführt wird. Ein zweiter Reboiler (23) ist nicht vorgesehen.

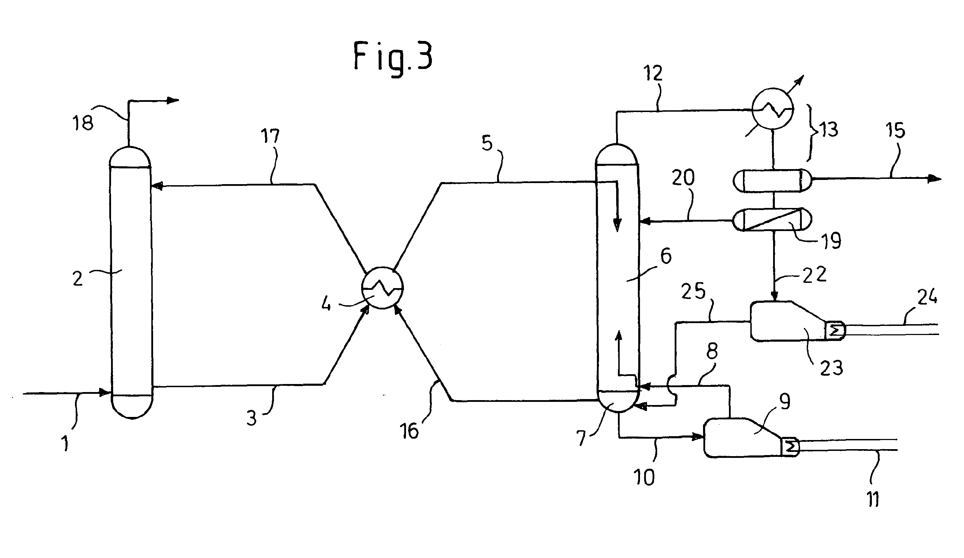

Abbildung 3 zeigt eine erfindungsgemäße Abgaswaschanlage, mit der das Abgaswaschverfahren gemäß Variante 3 betrieben werden kann. Von der in Abbildung 2 gezeigten Anlage unterscheidet sich diese Anlage dadurch, dass diese einen dem Abscheider (19) nachgeschalteten und mit diesem über die Leitung (22) verbundenen zweiten Reboiler (23) umfasst, von dem aus die Strippkomponente - erwärmt oder gegebenenfalls als Dampf - über die Leitung (25) in den Desorbersumpf (7) zurückgeführt wird. Der zweiten Reboiler (23) wird über die Leitung (24) mit z. B. Niederdruckdampf oder vorzugsweise mit Niedertemperaturwärme versorgt.

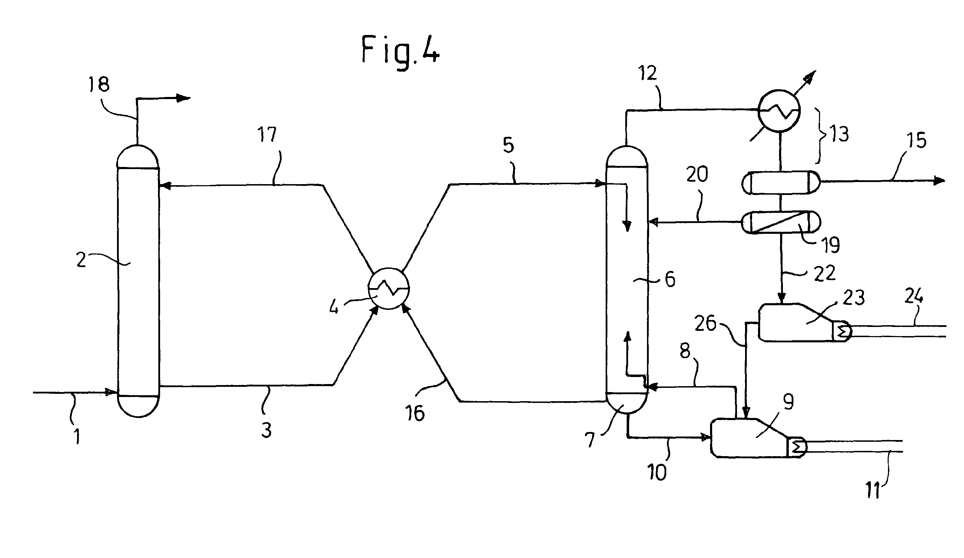

Abbildung 4 zeigt eine erfindungsgemäße Abgaswaschanlage auf, mit der das Abgaswaschverfahren gemäß Variante 4 betrieben werden kann. Von der in Abbildung 3 gezeigten Anlage unterscheidet sich diese Anlage dadurch, dass die von dem zweiten Reboiler (23) aus kommende erwärmte Strippkomponente - gegebenenfalls auch dampfförmig - nicht über die in Abbildung 3 gezeigte Leitung (25) in den Desorber (6) zurückgeführt wird, sondern über die Leitung (26) in den ersten Reboiler (9) und erst von dort aus in den Desorber (6).

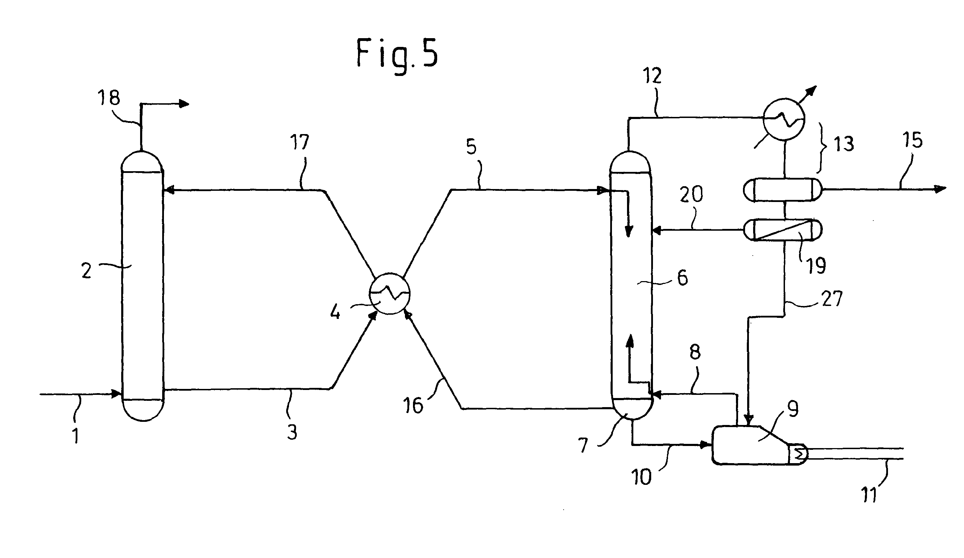

Abbildung 5 zeigt eine erfindungsgemäße Abgaswaschanlage, mit der das Abgaswaschverfahren gemäß Variante 5 betrieben werden kann. Von der in Abbildung 4 gezeigten Anlage unterscheidet sich diese Anlage dadurch, dass die von dem Abscheider (19) aus kommende Strippkomponente über die Leitung (27) direkt in den ersten Reboiler (9) überführt wird und erst von dort aus in den Desorber (6). Eine Vorwärmung in einem zweiten Reboiler (23) ist hier nicht vorgesehen.

Bezugszeichenliste

(1) Leitung für $CO_2$-enthaltende Abgase
(2) Absorberkolonne (Absorber)
(3) Leitung für $CO_2$-beladenes Lösungsmittel
(4) Wärmetauscher (z. B. Kreuzstrom-Wärmetauscher)
(5) Leitung für vorgewärmtes $CO_2$-beladenes Lösungsmittel
(6) Desorberkolonne (Desorber)
(7) Desorbersumpf
(8) Leitung für vom ersten Reboiler (9) kommenden heißen Dampf
(9) erster Reboiler
(10) Leitung für Sumpfstrom des Desorbers zum ersten Reboiler (9)
(11) Niederdruckdampfleitung
(12) Leitung für heißes $CO_2$/Wasserdampf/ggf. Strippkomponente-Gemisch vom Desorberkopf zum Kondensator (13)
(13) Kondensator
(14) Leitung vom Kondensator zum Desorber
(15) Leitung für $CO_2$ vom Kondensator
(16) Leitung für heißes $CO_2$-armes Lösungsmittel vom Desorbersumpf kommend
(17) Leitung für abgekühltes $CO_2$-armes Lösungsmittel vom Wärmetauscher kommend und zum Absorber (2) führend
(18) Leitung für Abgas (z. B. $N_2$) vom Absorberkopf kommend
(19) Abscheider
(20) Leitung für abgetrenntes Lösungsmittel vom Abscheider zum Desorber
(21) Leitung für abgetrennte Strippkomponente vom Abscheider zum Desorber
(22) Leitung vom Abscheider zum zweiten Reboiler (23)
(23) zweiter Reboiler
(24) Niederdruckdampfleitung oder Niedertemperaturwärmeleitung
(25) Leitung vom zweiten Reboiler (23) zum Desorbersumpf (7)
(26) Leitung vom zweiten Reboiler (23) zum ersten Reboiler (9)
(27) Leitung vom Abscheider zum ersten Reboiler (9)

**Patentansprüche**

1. Verfahren zur Abtrennung von $CO_2$ aus Abgasen, wobei in einer Abgaswaschanlage das $CO_2$ durch ein oder mehrere $CO_2$-bindende Lösungsmittel aus den Abgasen ausgewaschen wird, **dadurch gekennzeichnet, dass** bei der Regeneration des $CO_2$-beladenen Lösungsmittels eine Strippkomponente verwendet wird.

2. Verfahren gemäß Anspruch 1, wobei die Abgase Verbrennungsabgase aus Kraftwerksprozessen oder sonstige Industrieabgase, insbesondere drucklose Industrieabgase, sind.

3. Verfahren gemäß Anspruch 1 oder 2, wobei die Abgaswaschanlage jeweils zumindest eine Absorberkolonne (2), eine Desorberkolonne (6), einen zwischen Absorber- und Desorberkolonne vorgesehenen Wärmetauscher (4), einen mit dem Kopf der Desorberkolonne verbundenen Kondensator (13) und einen mit dem Sumpf der Desorberkolonne verbundenen Reboiler (9) umfasst.

4. Verfahren gemäß einem der vorhergehenden Ansprüche, wobei das $CO_2$-bindende Lösungsmittel entweder eine nicht-wässrige ionische Flüssigkeit oder ein wässriges Lösungsmittel, insbesondere ein wässriges Amin, ist.

5. Verfahren gemäß Anspruch 4, wobei das Lösungsmittel eine 5 bis 50 Gew.-% Amin, insbesondere Monoethanolamin, Methyldiethanolamin und/oder ein sterisch gehindertes Amin, enthaltende wässrige Lösung ist.

6. Verfahren gemäß einem der vorhergehenden Ansprüche, wobei die Strippkomponente mit dem Lösungsmittel im angewendeten Temperaturbereich im Wesentlichen nicht mischbar ist, mit diesem keine chemischen Reaktionen eingeht und eine niedrigere Siedetemperatur als dieses aufweist.

7. Verfahren gemäß Anspruch 6, wobei die Strippkomponente ein Alkan, insbesondere ein Fluoralkan, ist.

8. Verfahren gemäß einem der Ansprüche 1 bis 7, wobei die Strippkomponente am Kondensator (13) zusammen mit dem Wasser aus dem $CO_2$-bindenden Lösungsmittel kondensiert und gemeinsam mit diesem in den Desorber (6) zurückgeführt wird.

9. Verfahren gemäß einem der Ansprüche 1 bis 7, wobei die Abgaswaschanlage zusätzlich einen dem Kondensator (13) nachgeschalteten Abscheider (19) umfasst, der die Strippkomponente von dem Wasser aus dem $CO_2$-bindenden Lösungsmittel trennt.

10. Verfahren gemäß Anspruch 9, wobei die Strippkomponente getrennt vom $CO_2$-bindenden Lösungsmittel in den Desorber (6) zurückgeführt wird.

11. Verfahren gemäß Anspruch 9, wobei die Abgaswaschanlage zusätzlich einen dem Abscheider (19) nachgeschalteten zweiten Reboiler (23) umfasst, der die Strippkomponente erwärmt oder verdampft und von dem aus die erwärmte oder dampfförmige Strippkomponente entweder direkt in den Desorbersumpf (7) oder via den ersten Reboiler (9) in den Desorber (6) zurückgeführt wird.

12. Verfahren gemäß Anspruch 11, wobei der zweiten Reboiler (23) mit Niedertemperaturwärme betrieben wird.

13. Verfahren gemäß Anspruch 9, wobei die am Abscheider (19) abgetrennte Strippkomponente via den Reboiler (9) in den Desorber (6) zurückgeführt wird.

14. Abgaswaschanlage zur Abtrennung von $CO_2$ aus Abgasen, insbesondere aus Verbrennungsabgasen aus Kraftwerksprozessen oder aus sonstigen Industrieabgasen, umfassend - jeweils zumindest - eine Absorberkolonne (2), eine Desorberkolonne (6), einen zwischen Absorber- und Desorberkolonne vorgesehenen Wärmetauscher (4), einen mit dem Kopf der Desorberkolonne verbundenen Kondensator (13) und einen mit dem Sumpf der Desorberkolonne verbundenen Reboiler (9), **dadurch gekennzeichnet, dass** die Abgaswaschanlage zusätzlich einen dem Kondensator (13) nachgeschalteten Abscheider (19) umfasst, der geeignet ist, eine Strippkomponente von einem Kondensat abzutrennen.

15. Abgaswaschanlage gemäß Anspruch 14, wobei die Abgaswaschanlage zusätzlich einen dem Abscheider (19) nachgeschalteten zweiten Reboiler (23) umfasst, von dem aus die Strippkomponente - erwärmt oder dampfförmig - entweder direkt in den Desorbersumpf oder via den ersten Reboiler (9) in den Desorber (6) zurückgeführt werden kann.

16. Abgaswaschanlage gemäß Anspruch 15, wobei der zweite Reboiler (23) ein Reboiler ist, der mit Niedertemperaturwärme betrieben werden kann.

17. Abgaswaschanlage gemäß Anspruch 14, wobei von dem Abscheider (19) aus die Strippkomponente entweder direkt oder via den ersten Reboiler (9) in den Desorber (6) zurückgeführt werden kannd.

18. Verwendung einer Strippkomponente bei der Regeneration eines $CO_2$-beladenen Lösungsmittels in einem Verfahren zur Abtrennung von $CO_2$ aus Abgasen in einer Abgaswaschanlage.

19. Verwendung eines einem Kondensator (13) nachgeschalteten Abscheiders (19) und, optional, eines dem Abscheider (19) nachgeschalteten zweiten Reboilers (23) in einem Verfahren zur Abtrennung von $CO_2$ aus Abgasen in einer Abgaswaschanlage, wobei der zweite Reboiler optional ein mit Niedertemperaturwärme betriebener Reboiler ist.

# Fig.1

# Fig.2

EP 1 967 249 A1

# Fig.3

# Fig.4

EP 1 967 249 A1

# Fig.5

EP 1 967 249 A1

Europäisches
Patentamt

**EUROPÄISCHER RECHERCHENBERICHT**

Nummer der Anmeldung

EP 07 00 4437

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TOBIESEN F A ET AL: "Study of a Modified Amine-Based Regeneration Unit" INDUSTRIAL AND ENGINEERING CHEMISTRY, PRODUCT RESEARCH AND DEVELOPMENT, AMERICAN CHEMICAL SOCIETY. WASHINGTON, US, Bd. 45, 2006, Seiten 2489-2496, XP007902698 ISSN: 0536-1079 * Seite 2489, Spalte 1 - Seite 2492, Spalte 2; Abbildung 1 * | 1-10,13, 14,17-19 | INV. B01D53/14 ADD. B01D3/00 |
| Y | * Seite 2489, Spalte 1 - Seite 2492, Spalte 2; Abbildung 1 * ----- | 11,12, 15,16 | |
| Y | EP 1 688 173 A (MITSUBISHI HEAVY IND LTD [JP]; KANSAI ELECTRIC POWER CO [JP]) 9. August 2006 (2006-08-09) * Absätze [0022], [0026], [0027], [0040]; Beispiel 1 * ----- | 11,12, 15,16 | |
| A | US 2005/169825 A1 (CADOURS RENAUD [FR] ET AL) 4. August 2005 (2005-08-04) * Seite 1, Absatz 10 * ----- | 4 | **RECHERCHIERTE SACHGEBIETE (IPC)** B01D |
| A | US 3 762 133 A (MERRIMAN J ET AL) 2. Oktober 1973 (1973-10-02) * Ansprüche 1,2 * ----- | 7 | |

Der vorliegende Recherchenbericht wurde für alle Patentansprüche erstellt

| Recherchenort | Abschlußdatum der Recherche | Prüfer |
|---|---|---|
| München | 31. Juli 2007 | Burkhardt, Thorsten |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
 Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 07 00 4437

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2007

| Im Recherchenbericht angeführtes Patentdokument | | Datum der Veröffentlichung | Mitglied(er) der Patentfamilie | | Datum der Veröffentlichung |
|---|---|---|---|---|---|
| EP 1688173 | A | 09-08-2006 | CA | 2535331 A1 | 07-08-2006 |
| | | | JP | 2006213580 A | 17-08-2006 |
| | | | US | 2006248890 A1 | 09-11-2006 |
| US 2005169825 | A1 | 04-08-2005 | EP | 1552874 A1 | 13-07-2005 |
| | | | FR | 2863910 A1 | 24-06-2005 |
| | | | JP | 2005230808 A | 02-09-2005 |
| US 3762133 | A | 02-10-1973 | CA | 965584 A1 | 08-04-1975 |
| | | | DE | 2250471 A1 | 19-04-1973 |
| | | | FR | 2156379 A1 | 25-05-1973 |
| | | | GB | 1388497 A | 26-03-1975 |
| | | | JP | 48047483 A | 05-07-1973 |
| | | | JP | 55011370 B | 25-03-1980 |

EPO FORM P0461

Für nähere Einzelheiten zu diesem Anhang : siehe Amtsblatt des Europäischen Patentamts, Nr.12/82